# EUROPÄISCHE PATENTSCHRIFT

(11) **EP 3 704 362 B1**
(45) Veröffentlichungstag und Bekanntmachung des Hinweises auf die Patenterteilung: **06.12.2023**
(21) Anmeldenummer: 18782981.7
(22) Anmeldetag: 05.10.2018
(51) Int. Cl.: F02D 41/02, F02D 41/00

(54) **VERFAHREN ZUR REGENERATION EINES RUSSPARTIKELFILTERS**
METHOD FOR THE REGENERATION OF A SOOT PARTICLE FILTER
PROCÉDÉ DE RÉGÉNÉRATION D'UN FILTRE À PARTICULES

(30) Priorität: 03.11.2017 DE 102017219594
(43) Veröffentlichungstag der Anmeldung: 09.09.2020
(73) Patentinhaber: Volkswagen Aktiengesellschaft, 38440 Wolfsburg (DE)
(72) Erfinder: NEE, Christoph, 38440 Wolfsburg (DE); JUNGNICKEL, Christian, 38551 Ribbesbüttel (DE)
(74) Vertreter: MFG Patentanwälte Meyer-Wildhagen Meggle-Freund Gerhard PartG mbB
(86) Internationale Anmeldenummer: PCT/EP2018/077114
(87) Internationale Veröffentlichungsnummer: WO 2019/086201

(56) Entgegenhaltungen:
- DE-A1-102005 057 505
- DE-A1-102011 056 657
- DE-A1-102012 022 153
- DE-A1-102016 101 105
- US-A1- 2011 072 799
- US-A1- 2017 158 194

## Beschreibung

Die vorliegende Erfindung betrifft ein Verfahren zur Regeneration eines Rußpartikelfilters, der auslassseitig an einem Verbrennungsmotor angeordnet ist.

Rußpartikelfilter sind für den Einsatz bei Dieselmotoren bekannt. Durch die verschärfte Abgasgesetzgebung werden jedoch zunehmend Partikelanforderungen (Grenzwerte für die ausgestoßene Partikelmasse und Partikelanzahl) zunehmend auch für Otto-Motoren mit Benzin-Direkteinspritzung relevant. Hier ist aufgrund des Diesel-ähnlichen Brennverfahrens von einer höheren emittierten Partikelmasse und Anzahl auszugehen. Um diese Grenzwerte einzuhalten ist es erforderlich, auch solche Otto-Motoren mit einer Abgasreinigungseinrichtung zu versehen, die zusätzlich zum üblichen Drei-Wege-Katalysator einen Partikelfilter umfasst.

Partikelfilter oder Rußpartikelfilter nehmen Rußpartikel, die bei der Verbrennung des Kraftstoffs entstehen und sich im Abgasstrom befinden auf. So wird die Masse und die Anzahl der ausgestoßenen Rußpartikel im am Endrohr gemessenen Abgas minimiert. Mit zunehmender Betriebsdauer wird der Partikelfilter immer stärker mit Rußpartikeln beladen. Dadurch wird der Abgasgegendruck erhöht. Das hat negative Auswirkung auf die Motorleistung und den Kraftstoffverbrauch. Daher muss der Rußpartikelfilter regelmäßig regeneriert werden, das heißt der eingelagerte Ruß muss von Zeit zu Zeit ausgelagert bzw. abgebaut werden.

Die Regeneration des Filters erfolgt während gesonderter Regenerationsphasen über einen oxidativen Abbrand der Partikel zu ungiftigem CO₂, der als exotherme Reaktion selbständig abläuft, sofern eine ausreichend hohe (Abgas)-Temperatur von ca. 600 °C und eine genügend hohe Sauerstoffkonzentration in dem Abgas vorliegen. Über die Zusammensetzung des Abgases und die Abgastemperatur kann der Verlauf der Regeneration gesteuert werden.

Der in dem Abgas vorliegende Sauerstoffanteil wird durch einen Lambda-Wert (λ) beschrieben, der für eine stöchiometrische Verbrennung den Wert 1 (λ = 1), bei einem Sauerstoff-Überschuss einen Wert > 1 (λ > 1 im sogenannten Magerbetrieb) und für einen SauerstoffMangel einen Wert < 1 (λ < 1) erhält.

Für die Regeneration eines Rußpartikelfilters wird ein Sauerstoffüberschuss benötigt. Dieser steht bei einem Otto-Motor mit einer klassischen stöchiometrischen Verbrennung (λ = 1) nur im Magerbetrieb (λ > 1) zur Verfügung. Die Verbrennung mit einem Sauerstoff-Überschuss (λ > 1) erzeugt hohe NOx-Emissionen, da hier der Konvertierungsbereich des typischerweise eingesetzten 3-Wege-Katalysators verlassen wird. Daher wird so ein Magerbetrieb typischerweise bei Ottomotoren nicht angestrebt.

Ein weiterer Ansatz besteht darin, den notwendigen Sauerstoff über die im Schubbetrieb "leer" (das heißt ohne Verbrennung) laufenden Zylinder zur Verfügung zu stellen. Dabei treiben die Räder den angekoppelten Motor an, der ohne Einspritzung betrieben wird. Die mitlaufenden Kolben arbeiten dabei als Luftpumpe und führen die Frischluft und den darin enthaltenen Sauerstoff durch den Motor zur Regeneration in den Rußpartikelfilter. So ein Verfahren zeigt DE 10 2010 046 899 A1. Ein weiteres Verfahren ist aus DE 102005057505 A1 bekannt.

Ein Schubbetrieb kann beispielsweise auch bei einem Hybridantrieb realisiert werden, bei dem der Vortrieb elektrisch erfolgt und so stark ist, dass er zusätzlich den mitlaufenden Verbrennungsmotor antreibt und so ebenfalls die Frischluft und den darin vorhandenen Sauerstoff durch den Verbrennungsmotor zum Rußpartikelfilter führt und die dort angelagerte Rußmenge abgebrannt wird. Allerdings ist eine Regeneration im reinen Schubbetrieb (ohne elektrische Unterstützung) nur in solchen Fahrzyklen möglich, in denen tatsächlich auch ein Schubbetrieb über einen längeren Zeitraum möglich ist (beispielsweise längere Bergabfahrt). Es gibt aber Fahr-/Betriebszyklen, bei denen kein ausreichend langer Zeitraum zur Verfügung steht, in dem kein Vortriebsmoment angefordert wird. Ein Schubbetrieb zur Regeneration kann beispielsweise nicht über die Motorsteuerung eingestellt werden, wenn nicht gleichzeitig ein entsprechender Fahrerwunsch vorliegt.

Die Regeneration während Brennkraftmaschinenabschaltung kann aber auch aufgrund von Sauerstoffsättigung vermehrte NOx-Emissionen bei nachfolgenden Brennkraftmaschinenstarts hervorrufen.

Aufgabe der vorliegenden Erfindung ist es, ein Verfahren zur Regeneration eines Rußpartikelfilters eines Verbrennungsmotors eines Kraftfahrzeuges und ein entsprechendes Kraftfahrzeug, das ein solches Verfahren ausführt, bereitzustellen, welches die oben genannten Nachteile wenigstens teilweise überwindet.

Diese Aufgabe wird durch das erfindungsgemäße Verfahren zur Regeneration einer Verbrennungsmotoranordnung nach Anspruch 1 und eine Steuerung zum Betreiben eines Verbrennungsmotors eines Kraftfahrzeugs nach Anspruch 6 gelöst. Nach einem ersten Aspekt der vorliegenden Erfindung umfasst das Verfahren zur Regeneration eines Rußpartikelfilters, der auslassseitig an einem Verbrennungsmotor angeordnet ist, die Merkmale von Anspruch 1.

Nach einem zweiten Aspekt der Erfindung umfasst diese eine Steuerung zum Betreiben eines Verbrennungsmotors eines Kraftfahrzeuges, die dazu ausgebildet ist, das erfindungsgemäße Verfahren durchzuführen.

Weitere Aspekte betreffen einen Verbrennungsmotor mit so einer Steuerung, sowie ein Kraftfahrzeug mit einem solchen Verbrennungsmotor.

Die Erfindung zeichnet sich dadurch aus, dass eine Frischluftzufuhr in den Rußpartikelfilter über wenigstens einen abgeschalteten Zylinder erfolgt. Die so erhöhte Sauerstoffmenge erlaubt einen Rußabbrand im Rußpartikelfilter im Fahrbetrieb (ähnlich einem Diesel-Fahrzeug) bei gleichzeitiger Bereitstellung eines Fahrerwunschmomentes. Gegenüber den alternativen Konzepten, die auf eine Magerverstellung bei der Verbrennung zurückgreifen, unterliegt das erfindungsgemäße Verfahren nicht den Begrenzungen hinsichtlich der sicheren Gemischaufbereitung und Zündfähigkeit. Der Betrieb eines an sich für den Homogenbetrieb ausgelegten Otto-Motors mit Sauerstoffüberschuss führt nämlich unter Umständen zu einem unruhigen Motorlauf.

Grundsätzlich ist das erfindungsgemäße Verfahren insbesondere für ein Otto-Motor-System geeignet, das einen Rußpartikelfilter (oder auch sogenannten Otto-Partikelfilter) aufweist, der im Fahrbetrieb regeneriert werden soll.

Dazu wird zunächst ein Beladungswert des Rußpartikelfilters erfasst. Weiter wird die Betriebstemperatur des Rußpartikelfilters erfasst, um festzustellen, ob eine ausreichende Betriebstemperatur vorliegt, die zum Regenerieren des Rußpartikelfilters erforderlich ist (üblicherweise ist eine Abbrenntemperatur von oberhalb 600°C erforderlich).

Die Beladungserfassung kann dabei entweder durch eine Differenzdruckmessung über den Rußpartikelfilter erfolgen oder aber auch modelliert werden, indem die Betriebspunkte der Vergangenheit und der damit zusammenhängende Partikelausstoß über die gesamte zurückliegende Betriebszeit integriert werden und so eine Beladung des Rußpartikelfilters bestimmt wird.

Weiter wird dann ein oder mehrere Zylinder des Verbrennungsmotors abgeschaltet, das heißt die Kraftstoffeinspritzung wird abgestellt. Dabei wird jedoch die Frischluftförderung von der Einlassseite zur Auslassseite des Zylinders beibehalten, um die gewünschte Sauerstoffmenge, die zur Regeneration erforderlich ist, in den Rußpartikelfilter einzubringen. Um die thermische Belastung des Rußpartikelfilters zu begrenzen, und insbesondere eine katalytische Beschichtung schonen zu können, wird dabei die Frischluftzufuhr und damit die Sauerstoffversorgung gesteuert, indem wenigstens eines der Zylinderventile (Einlass- und/oder Auslassventil) eingestellt wird.

Auf diese Weise kann dann die gewünschte Regeneration des Rußpartikelfilters erfolgen. Dabei kann durch das erfindungsgemäße Verfahren zum einen ein Fahrerwunsch über die weiter befeuerten Zylinder weiterhin aufrechterhalten werden und dennoch zusätzlicher Sauerstoff aus der Frischluft in den Abgastrakt und damit in den Rußpartikelfilter gefördert werden. Zum anderen kann die Frischluftzufuhr so gesteuert werden, dass die thermische Belastung beim Regenerieren des Rußpartikelfilters in erträglichen Grenzen gehalten werden kann.

Dabei gibt es Ausführungen, bei denen ein Aufheizen des Rußpartikelfilters vorgesehen wird, wenn der Beladungswert einen ersten Beladungswert oder Regenerationswert erreicht und die Betriebstemperatur unter einer ersten Betriebstemperatur oder einer Regenerationstemperatur liegt.

Äußere Maßnahmen, um den Rußpartikelfilter auf die notwendige Temperatur für die Rußverbrennung zu bringen, können darin bestehen, eine (z.B. elektrische) Beheizung des Gasstroms bzw. der Filtermatrix selbst vorzusehen. Es ist auch möglich, die notwendige Regenerationsenergie aus der motorischen Verbrennung zu gewinnen (zum Beispiel Späteinspritzung, Nacheinspritzung, Drosselung und Abgasrückführung).

Alternativ oder ergänzend ist es auch möglich, durch dem Kraftstoff in geringen Konzentrationen zugemischte Additive die Rußabbrandtemperatur durch katalytische Wirkung bis auf ca. 300°C abzusenken. Eine ähnliche Wirkung hat auch die katalytische Beschichtung der Filterflächen mit Übergangsmetallen.

Das Starten der Frischluftzufuhr erfolgt beim Erreichen der ersten Betriebstemperatur (Regenerationstemperatur des Rußpartikelfilters), die oberhalb von 450°C und insbesondere bei 600°C liegt. Damit kann sichergestellt werden, dass optimale Abbrandbedingungen vorliegen, um den Rußpartikelfilter zu regenerieren.

Es gibt Ausführungen, bei denen das Einstellen des Zylinderventils mittels einer Stelleinrichtung erfolgt, die über eine Steuerung ansteuerbar ist. Über die Einstellung des Zylinderventils (oder aber auch mehrerer Zylinderventile) wird die Frischluftzufuhr gesteuert. Üblicherweise erfolgt die Ventilsteuerung über die Steuernocken der Nockenwelle, welche den Ventilhub und das Hubprofil und die Hubzeiten steuern. Es gibt aber auch Ausführungen, bei denen die Ventile über Stellelemente (beispielsweise elektromechanisch bzw. elektromagnetisch) direkt angesteuert werden.

Weiterhin sind Nockenwellenverstelleinrichtungen bekannt, bei denen entweder die Nockenwellen selbst in Umfangsrichtung verstellt werden, um so die Steuerzeiten zu verändern, oder aber unterschiedliche oder veränderbare Nockenprofile auswählbar sind, um die Ventilsteuerung zu beeinflussen.

Auf diese Weise kann berücksichtigt werden, dass die für die Regeneration des Rußpartikelfilters erforderliche Luft bzw. Sauerstoffmenge geringer ist, als die, die für einen Verbrennungsbetrieb benötigt werden würde. Die Ventilsteuerung sieht also auf den ausgeblendeten, "kalten" Zylindern eine deutlich geringere Frischluftförderung vor. Dies kann entweder über eine entsprechende Ansteuerung der Stelleinrichtung mittels einer Motorsteuerung erfolgen oder durch Umstellung auf eine separate Steuernocke, die ebenfalls über die Motorsteuerung aktiviert wird.

Dabei gibt es Ausführungen, bei denen die Steuernocke so ausgebildet ist, dass sie einen reduzierten Ventilhub bewirkt und so die Frischluftzufuhr optimiert für die Regenerationsphase einstellt.

Es ist auch möglich, die Ansteuerung der Auslass- und Einlassventile unabhängig voneinander vorzunehmen. So kann beispielsweise die erforderliche Frischluftmenge über die Einlassventile reguliert werden (Ansteuerung einer Stelleinrichtung bzw. Umstellung auf eine separate Steuernocke mit reduziertem Ventilhub) und die Auslassventile werden entsprechend der gewünschten Betriebsart gestellt.

Für eine Regeneration des Partikelfilters werden die Auslassventile im normalen Rhythmus und mit dem normalen Ventilhub geöffnet (die Frischluftmenge wird über die Einlassventile reguliert), und die über die Kolben durch den Zylinder geförderte Luft kann in die Abgasanlage bzw. den Rußpartikelfilter entweichen.

In einem Zylinderabschaltbetrieb (ohne Aktuierung der Auslassventile) werden diese auf ein sogenanntes Nullnockenprofil umgeschaltet, so dass der Auslass geschlossen bleibt und die Zylinder ausschließlich als Gasfeder betrieben wird.

Es gibt Ausführungen, bei denen beim Regenerieren des Rußpartikelfilters ein dem Fahrerwunsch entsprechender Betriebszustand über die aktiven Zylinder aufrechterhalten wird. Dabei wird der Leistungsverlust der im Abschalt- bzw. Frischluftzufuhrbetrieb laufenden Zylinder durch eine entsprechende Leistungserhöhung der verbleibenden aktiven Zylinder ausgeglichen. Die damit verbundene Lasterhöhung an den verbleibenden "brennenden Zylindern" sorgt auch für eine höhere größere Abgasenthalpie (höhere Abgastemperatur), welche den Rußabbrand im Rußpartikelfilter befördert.

Alternativ zu der oben dargestellten Frischluftzufuhr über "leer" laufende Zylinder ist es auch möglich, teilweise Zylinderabschaltungen vorzunehmen, das heißt in zyklischen Abständen, ähnlich wie bei Verbrennungsaussetzern, einzelne Zylinder ohne Einspritzung und nur mit Frischluftförderung mitlaufen zu lassen.

In ähnlicher Weise können auch zyklisch Verbrennungstakte durch Einspritzausblendung unterbunden werden und für eine erhöhte Frischluft/Sauerstoffförderung herangezogen werden.

Es gibt weiterhin Ausführungen, bei denen eine Steuerung (insbesondere eine Motorsteuerung) zum Betreiben eines Verbrennungsmotors eines Kraftfahrzeugs vorgesehen ist, die dazu ausgebildet ist, das oben dargestellte Verfahren auszuführen.

Ein Verbrennungsmotor, welcher mit einer solchen Steuerung versehen ist, kann nach einem der folgenden Motorprinzipien arbeiten: Otto-, Diesel- und Gas-Motor. Insbesondere ist das erfindungsgemäße Verfahren jedoch für die Ausführung im Zusammenhang mit Otto-Motoren mit Direkteinspritzung vorgesehen.

Schließlich betrifft die Erfindung Kraftfahrzeuge mit einem Verbrennungsmotor mit den oben dargestellten Eigenschaften. Solche Kraftfahrzeuge sind geeignet, auch im Otto-Betrieb die gegenwärtigen und zukünftigen erhöhten Anforderungen hinsichtlich der Rußpartikelemissionen zu erfüllen.

Weitere vorteilhafte Ausgestaltungen der Erfindung ergeben sich aus den Unteransprüchen und der folgenden Beschreibung bevorzugter Ausführungsbeispiele der vorliegenden Erfindung.

Ausführungsbeispiele der Erfindung werden nun beispielhaft und unter Bezugnahme auf die beigefügte Zeichnung beschrieben. Darin zeigt:
- Fig. 1: einen schematischen Ablauf eines Ausführungsbeispiels des erfindungsgemäßen Verfahren zur Regeneration eines Rußpartikelfilters;
- Fig. 2: eine schematische Darstellung einer Verbrennungsmotoranordnung mit einem in deren Abgastrakt angeordneten Rußpartikelfilter;
- Fig. 3: einen Verbrennungsmotor mit abgeschalteten Zylinder, in dem das erfindungsgemäße Verfahren ausführbar ist.

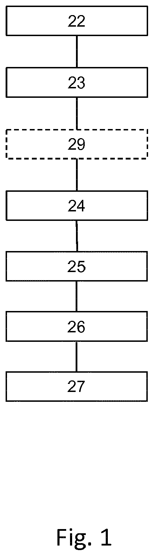

Figur 1 zeigt den schematischen Ablauf eines erfindungsgemäßen Verfahrens zur Regeneration eines Rußpartikelfilters. Das Verfahren umfasst den Schritt 22 Erfassen eines Beladungswert des Rußpartikelfilters, den Schritt 23 Erfassen einer Betriebstemperatur des Rußpartikelfilters, den Schritt 24 Abschalten eines Zylinders des Verbrennungsmotors, den Schritt 25 Starten einer Frischluftzufuhr in den Rußpartikelfilter über den abgeschalteten Zylinder, den Schritt 26 Einstellen eines Zylinderventils zum Steuern der Frischluftzufuhr und den Schritt 27 Regenerieren des Rußpartikelfilters.

Optional ist der Schritt 29 Aufheizen des Rußpartikelfilters vorgesehen. Dieser Schritt 29 wird bedingt ausgeführt, wenn der Beladungswert einen ersten Beladungswert erreicht, der einem Regenerationswert des Rußpartikelfilters entspricht.

Als Beladungswert gilt hier ein aus einer Messung abgeleiteter Beladungswert oder ein modellierter Beladungswert des Rußpartikelfilters. Ein aus einer Messung abgeleiteter Beladungswert basiert beispielsweise auf einem Druckabfall, der mittels zweier Drucksensoren ermittelt, die jeweils in Strömungsrichtung gesehen vor und hinter dem Rußpartikelfilter angeordnet sind. Bei verstärkter Beladung/Belastung des Rußpartikelfilters erhöht sich durch den damit ansteigenden Strömungswiderstand der Druckabfall (die Druckdifferenz zwischen den beiden Drucksensoren). Aus dieser Differenz kann dann ein Beladungswert abgeleitet werden.

Bei einem modellierten Beladungswert wird anhand der erfassten Betriebszustände des Verbrennungsmotors eine erwartete Rußablagerung über einen Betriebszeitraum modelliert, der die erfassten Betriebspunkte/-zustände berücksichtigt. Beide Verfahren können auch kombiniert werden.

Der Schritt 25, das Starten einer Frischluftzufuhr in den Rußpartikelfilter wird bedingt ausgeführt werden, und zwar in Abhängigkeit von einer Betriebstemperatur des Rußpartikelfilters, die z.B. oberhalb von 450°C liegt und insbesondere über 600°C liegt. Die Betriebstemperatur des Rußpartikelfilters kann entweder direkt durch thermische Messungen im oder am Rußpartikelfilter erfolgen oder auch indirekt über die Temperaturbestimmung eines den Rußpartikelfilter durchströmenden Abgasstroms ermittelt werden. Dazu können vor, nach oder auch im Rußpartikelfilter entsprechende Temperatursensoren vorgesehen.

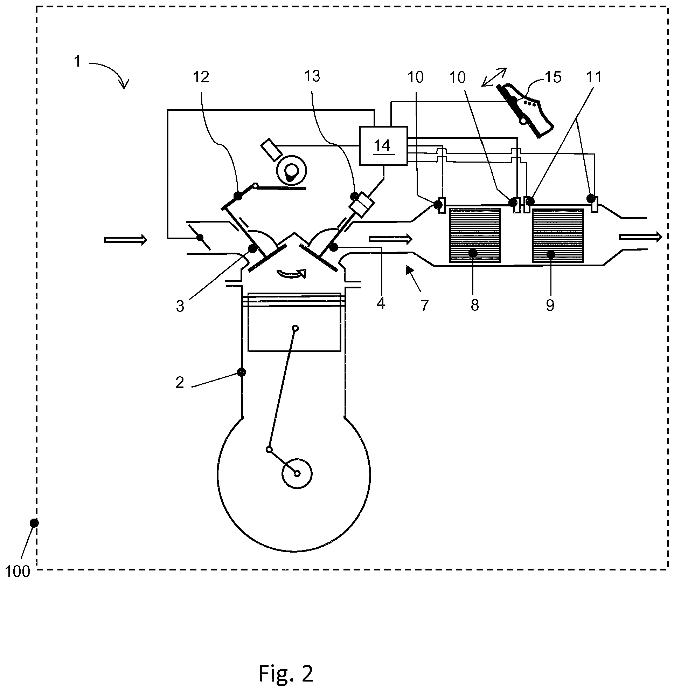

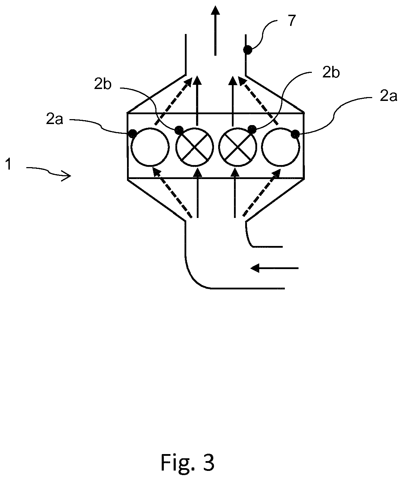

Die Figuren 2 und 3 zeigen in schematischer Darstellung einen Verbrennungsmotor in einem Kraftfahrzeug, der zur Durchführung des erfindungsgemäßen Verfahrens geeignet ist.

Figur 2 zeigt schematisch einen Verbrennungsmotor 1 mit vier Zylindern 2 (vergleiche Figur 3), die mit jeweils einem Einlass- und einem Auslassventil 3, 4 versehen sind. Die Frischluftzufuhr wird über ein Saugrohr 5 mit einer Drosselklappe 6 gesteuert. Das Abgas durchströmt einen Auslasstrakt 7, in dem in Strömungsrichtung hintereinander gesehen ein Oxidationskatalysator 8 und ein Partikelfilter 9 vorgesehen sind.

Vor und nach dem Oxidationskatalysator sind jeweils Temperatursensoren 10 vorgesehen und vor und nach dem Rußpartikelfilter 9 sind jeweils Drucksensoren 11.

Für die Ventilsteuerung sind zwei Alternativen dargstellt. Das Einlassventil 3 ist hier mit einer Nockenwellensteuerung 12 angesteuert und für das Auslassventil 4 ist ein Stellelement 13 dargestellt. Die Nockenwellensteuerung 12 und das Stellelement 13 zeigen Alternativen, die sowohl wechselseitig als auch in Kombination realisiert werden können, das heißt sowohl das Auslassventil 4 als auch das Einlassventil 3 können mit einem Stellelement 13 angesteuert werden und andererseits können auch das Einlassventil 3 und das Auslassventil 4 mit einer Nockenwellensteuerung angesteuert werden.

Die Motorsteuerung erfolgt über ein Steuergerät 14 (ECU), welches über Signalleitungen mit der Drosselklappe 6 der Nockenwellensteuerung 12 dem Stellelement 13, den Temperatursensoren 10, den Drucksensoren 11 und mit einem Gaspedal 15 verbunden ist, über das durch Betätigung ein Fahrerwunsch (Leistungsanforderung) definiert werden kann.

Der Verbrennungsmotor 1 ist Bestandteil eines Fahrzeugs 100 und kann beispielsweise auch in ein Hybridantriebskonzept mit einem oder mehreren Elektromotoren integriert sein.

Das oben dargestellte Verfahren wird nun wie folgt in dem in Figur 2 dargestellten Verbrennungsmotor 1 durchgeführt. Der Beladungswert des Rußpartikelfilters 9 wird entweder mit Hilfe der Drucksensoren 11 ermittelt, die einen Druckabfall bzw. eine Druckdifferenz zwischen der Einlass- und der Auslassseite des Rußpartikelfilters 9 ermitteln. Auf dieser Grundlage kann ein Beladungswert des Rußpartikelfilters bestimmt werden. Alternativ oder ergänzend kann der Beladungswert auch mit Hilfe des Steuergerätes 14 modelliert werden, indem durch die Erfassung der Betriebspunkte eine Rußpartikelbelastung über einen bestimmten Betriebszeitraum ermittelt wird. Damit kann erfasst werden, ob der Beladungswert einen Regenerationswert erreicht hat, bei dem der Rußpartikelfilter 9 regeneriert werden muss.

Parallel dazu wird über einen oder beide Temperatursensoren 10 eine Abgastemperatur bzw. eine Betriebstemperatur des Rußpartikelfilters 9 ermittelt, indem die Abgastemperatur gemessen wird. In alternativen Ausführungen ist es auch möglich, einen Messsensor direkt am oder im Rußpartikelfilter 9 vorzusehen.

Entspricht der Beladungswert des Rußpartikelfilters einem Regenerationswert und entspricht die Betriebstemperatur des Rußpartikelfilters einer Regenerationstemperatur (zum Beispiel oberhalb von 450°C oder bei 600°C), so wird der eigentliche Regenerationsprozess gestartet.

Entspricht die Betriebstemperatur nicht der Regenerationstemperatur, ist also die Betriebstemperatur unterhalb einer Regenerationstemperatur, so wird der Rußpartikelfilter 9 aufgeheizt, entweder durch externe Heizmaßnahmen oder auch durch motorische Heizmaßnahmen (Erhöhung des Lastpunktes, zusätzliche Kraftstoffeinspritzung).

Zum Starten des Regenerationsvorgangs werden ein oder mehrere Zylinder 2b abgeschaltet. In der Figur 3 sind die abgeschalteten Zylinder 2b durch ein X markiert, während die äußeren Zylinder 2a weiter betrieben werden. Da für die Regeneration der Sauerstoffbedarf geringer ist als für die Kraftstoffverbrennung, wird die Frischluftzufuhr über die Zylinderventile (Einlassventil 3 und/oder Auslassventil 4) eingestellt.

Bei einem Verfahren wird dazu vom Motorsteuergerät 14 die Nockenwellensteuerung 12 derart angesteuert, dass eine Zylindernocke aktiviert wird, über die ein reduzierter Öffnungsquerschnitt realisiert wird und so die Frischluftmenge nach unten reguliert wird.

Alternativ kann dies auch über Stellelemente 13 erfolgen, welche entweder jeweils das Einlassventil und/oder das Auslassventil ansteuern. Die Steuerung des Stellelements 13 wird dabei ebenfalls über das Steuergerät 14 realisiert. In diesem Betriebszustand laufen die äußeren Zylinder 2a im Normalbetrieb weiter und die inneren Zylinder 2b laufen als Frischluftpumpe, wobei die Frischluftzufuhr und damit die Sauerstoffmenge über die Zylinderventile 3, 4 gesteuert wird. Das mit zusätzlicher Frischluft angereicherte Abgas wird über den Oxidationskatalysator in den Rußpartikelfilter 9 eingeleitet, wo der Sauerstoff die Rußverbrennung im Rußpartikelfilter 9 auslöst und bewirkt.

Über das Steuergerät 14 wird eine dem vor der Regeneration gewählter Fahrerwunsch (Leistungsanforderung) aufrechterhalten, indem der durch den Wegfall der inneren Zylinder 2a auftretende Leistungsverlust durch eine Lastanhebung der beiden äußeren Zylinder 2b ausgeglichen wird. Die Steuerung erfolgt dabei so, dass der Wechsel des Betriebszustandes vom Normalbetrieb in den Regenerationsbetrieb den Fahrerwunsch nicht beeinflusst und der Wechsel nur geringfügig wahrnehmbar ist. Gleichzeitig wird durch die Lastpunktanhebung der beiden äußeren Zylinder die Abgastemperatur erhöht, wodurch auch der Rußpartikelfilter 9 zusätzlich aufgeheizt werden kann, was wiederum den Abbrand der Rußablagerungen fördert.

Das Steuergerät 14 führt dabei das erfindungsgemäße Verfahren gemäß Figur 1 aus. Der dargestellte Verbrennungsmotor ist insbesondere als Otto-Motor mit Direkteinspritzung ausgebildet und Bestandteil des Fahrzeugs 100.

Weitere Varianten und Ausführungen der Erfindung entnimmt der Fachmann den Ansprüchen.

### Bezugszeichenliste

- 1: Verbrennungsmotor
- 2: Zylinder
- 2a: äußerer Zylinder
- 2b: innerer Zylinder
- 3: Einlassventil
- 4: Auslassventil
- 5: Saugrohr
- 6: Drosselklappe
- 7: Auslasstrakt
- 8: Oxidationskatalysator
- 9: Partikelfilter, Rußpartikelfilter, Ottopartikelfilter
- 10: Temperatursensoren
- 11: Drucksensoren
- 12: Nockenwellensteuerung
- 13: Stellelement
- 14: Steuergerät
- 15: Gaspedal
- 100: Kraftfahrzeug

## Patentansprüche

1. Verfahren zur Regeneration eines Rußpartikelfilters (9), der auslassseitig an einem Verbrennungsmotor (1) angeordnet ist, mit:
- Erfassen eines Beladungswertes des Rußpartikelfilters (9);
- Erfassen einer Betriebstemperatur des Rußpartikelfilters (9);
- Abschalten eines Zylinders (2) des Verbrennungsmotors (1)
- Starten einer Frischluftzufuhr in den Rußpartikelfilter (9) über den abgeschalteten Zylinder (2a) beim Erreichen einer Betriebstemperatur des Rußpartikelfilters (9) erfolgt, die oberhalb von 450 °C liegt und insbesondere bei 600 °C liegt;
- Einstellen eines Einlassventils (3) des abgeschalteten Zylinders (2) zum Steuern der Frischluftzufuhr, wobei das Einstellen des Einlassventils (3) mittels einer Stelleinrichtung (12; 13) erfolgt, die über eine Steuerung (14) ansteuerbar ist; und
- Regenerieren des Rußpartikelfilters (9).

2. Verfahren nach Anspruch 1, zusätzlich aufweisend, Aufheizen des Rußpartikelfilters (9), wenn der Beladungswert einen ersten Beladungswert erreicht und die Betriebstemperatur unter einer ersten Betriebstemperatur liegt.

3. Verfahren nach einem der vorhergehenden Ansprüche, wobei die Einstellung des Zylinderventils (3; 4) mittels einer Umstellung auf eine separate Steuernocke erfolgt.

4. Verfahren nach Anspruch 3, wobei die Steuernocke so ausgebildet ist, dass sie einen erhöhten Ventilhub bewirkt und so die Frischluftzufuhr erhöht.

5. Verfahren nach einem der vorhergehenden Ansprüche, wobei beim Regenerieren des Rußpartikelfilters (9) ein dem Fahrerwunsch entsprechender Betriebszustand über die aktiven Zylinder (2a) aufrechterhalten wird.

6. Steuerung (14) zum Betreiben eines Verbrennungsmotors (1) eines Kraftfahrzeugs (100), die dazu ausgebildet ist, ein Verfahren nach einem der Ansprüche 1 bis 5 auszuführen.

7. Verbrennungsmotor (1) mit einer Steuerung (14) nach Anspruch 6, wobei der Verbrennungsmotor (1) nach einem der folgenden Motorprinzipien arbeitet: Otto-, Diesel und Gasmotor.

8. Kraftfahrzeug (100) mit einem Verbrennungsmotor (1) nach Anspruch 7.

## Claims

1. Method for the regeneration of a soot particle filter (9), which is arranged on the outlet side of a combustion engine (1), comprising:
- detecting a loading value of the soot particle filter (9);
- detecting an operating temperature of the soot particle filter (9);
- deactivating a cylinder (2) of the combustion engine (1);
- starting to feed fresh air into the soot particle filter (9) via the deactivated cylinder (2a) when the soot particle filter (9) reaches an operating temperature above 450°C and in particular of 600°C;
- adjusting an inlet valve (3) of the deactivated cylinder (2) in order to control the feed of fresh air, wherein the inlet valve (3) is adjusted by means of an actuating device (12; 13), which can be actuated by way of a controller (14); and
- regenerating the soot particle filter (9).

2. Method according to Claim 1, additionally comprising heating the soot particle filter (9) when the loading value reaches a first loading value and the operating temperature is below a first operating temperature.

3. Method according to either of the preceding claims, wherein the cylinder valve (3; 4) is adjusted by means of a switchover to a separate control cam.

4. Method according to Claim 3, wherein the control cam is configured such that it effects an increased valve lift and the feed of fresh air is thus increased.

5. Method according to one of the preceding claims, wherein, during the regeneration of the soot particle filter (9), an operating state corresponding to the driver demand is maintained by way of the active cylinder (2a).

6. Controller (14) for operating a combustion engine (1) of a motor vehicle (100), said controller being configured to carry out a method according to one of Claims 1 to 5.

7. Combustion engine (1) comprising a controller (14) according to Claim 6, wherein the combustion engine (1) operates in accordance with one of the following engine principles: petrol engine, diesel engine and gas engine.

8. Motor vehicle (100) comprising a combustion engine (1) according to Claim 7.

## Revendications

1. Procédé de régénération d'un filtre à particules (9), qui est disposé du côté de l'échappement sur un moteur à combustion interne (1), comprenant:
- la détection d'une valeur de charge du filtre à particules (9);
- la détection d'une température de fonctionnement du filtre à particules (9);
- l'arrêt d'un cylindre (2) du moteur à combustion interne (1),
- le démarrage d'une amenée d'air frais dans le filtre à particules (9) par l'intermédiaire du cylindre (2a) désactivé lorsqu'une température de fonctionnement du filtre à particules (9) est atteinte, laquelle est supérieure à 450°C et est notamment supérieure à 600°C;
- le réglage d'une soupape d'admission (3) du cylindre (2) désactivé pour commander l'arrivée d'air frais, le réglage de la soupape d'admission (3) s'effectuant au moyen d'un dispositif de réglage (12 ; 13) qui est apte à être commandé par une commande (14); et
- la régénération du filtre à particules (9).

2. Procédé selon la revendication 1, comprenant en outre le chauffage du filtre à particules (9) lorsque la valeur de charge atteint une première valeur de charge et que la température de fonctionnement est inférieure à une première température de fonctionnement.

3. Procédé selon l'une des revendications précédentes, dans lequel le réglage de la soupape de cylindre (3 ; 4) est effectué au moyen d'une commutation sur une came de commande séparée.

4. Procédé selon la revendication 3, dans lequel la came de commande est conçue de telle sorte qu'elle provoque une levée accrue de la soupape et qu'elle augmente ainsi l'alimentation en air frais.

5. Procédé selon l'une des revendications précédentes, dans lequel, lors de la régénération du filtre à particules (9), un état de fonctionnement correspondant à la demande du conducteur est maintenu via les cylindres actifs (2a).

6. Commande (14) de fonctionnement d'un moteur à combustion interne (1) d'un véhicule automobile (100), adapté pour mettre en oeuvre un procédé selon l'une des revendications 1 à 5.

7. Moteur à combustion interne (1) équipé d'une commande (14) selon la revendication 6, dans lequel le moteur à combustion interne (1) fonctionne selon l'un des principes moteurs suivants : Essence, Diesel et gaz.

8. Véhicule automobile (100) équipé d'un moteur à combustion interne (1) selon la revendication 7.
